# FASCICULE DE BREVET EUROPEEN

(11) **EP 3 205 307 B1**
(45) Date de publication et mention de la délivrance du brevet: **15.05.2019**
(21) Numéro de dépôt: 17155733.3
(22) Date de dépôt: 10.02.2017
(51) Int. Cl.: A61C 8/00

(54) **PROCÉDÉ DE FABRICATION D'UN PILIER DENTAIRE PAR MOULAGE**
HERSTELLUNGSVERFAHREN EINES ABUTMENTS DURCH SPRITZGUSS
METHOD FOR PRODUCING A DENTAL PILLAR BY MOULDING

(30) Priorité: 12.02.2016 FR 1651176
(43) Date de publication de la demande: 16.08.2017
(73) Titulaire: Mojito, 83570 Cotignac (FR)
(72) Inventeur: Maisonneuve, Robin, 69970 Chaponnay (FR)
(74) Mandataire: Santarelli

(56) Documents cités:
- EP-A1- 2 022 439
- KR-A- 20110 105 430
- US-A1- 2002 064 745
- US-A1- 2010 021 865
- US-B2- 6 939 489

## Description

La présente invention concerne un procédé de fabrication d'un pilier dentaire. Bien que décrit, un pilier dentaire obtenu par un tel procédé ne fait pas partie de la présente invention.

En implantologie dentaire, la réalisation des prothèses sur implant se fait via une interface située entre l'implant et la couronne : le pilier dentaire.

Le pilier dentaire (également dit pilier implantaire) a un rôle prépondérant dans la réussite du cas implantaire de par le fait qu'il assure à la fois une transmission des efforts occlusaux ainsi qu'une composante esthétique par la cicatrisation des tissus gingivaux.

Par conséquent, chaque pilier dentaire est propre à un implant et une couronne, laquelle est réalisée au cas par cas. Pour que le positionnement du pilier dentaire soit bon, il faut conformer précisément une partie basse du pilier dentaire en fonction de l'implant et une partie haute du pilier dentaire est conformée en fonction de la couronne qui représente la dent à remplacer.

Pour cela, les piliers dentaires peuvent donc être fabriqués selon différents procédés.

Par exemple, ils peuvent être fabriqués selon un procédé standard qui consiste à acheter des piliers dentaires de formes génériques sur catalogue puis à les faire retoucher par le prothésiste afin de les conformer aux besoins des secteurs anatomiques concernés.

Selon un autre exemple, ils peuvent être fabriqués selon un procédé personnalisé qui consiste notamment en un usinage classique monobloc à partir d'une galette de matériau, généralement de chrome-cobalt ou de titane ou en une sur-coulée par la technique de la cire perdue sur pilier dentaire calcinable. Ce procédé permet d'obtenir des géométries idoines avec les morphologies prothétiques et anatomiques du patient.

Or un tel procédé est long et couteux, principalement du fait que les piliers dentaires sont alors réalisés au cas par cas.

Selon encore un autre exemple, il existe une technologie dite « hybride » dans laquelle une partie du pilier dentaire destinée à coopérer avec l'implant est réalisée de manière standard, usinée en série, souvent en métal, et une autre partie du pilier dentaire, destinée à recevoir la couronne, est personnalisée, réalisée au cas par cas, par usinage, en zircone.

Une telle technologie est avantageuse pour des productions de toutes petites séries dans des laboratoires de prothèses.

Cependant, une telle réalisation du pilier dentaire en deux parties peut présenter des difficultés en ce qui concerne leur assemblage l'une à l'autre et requiert généralement un temps de fabrication important ainsi que l'éventuel rajout d'une colle afin de solidariser les deux parties entre elles.

Le document US 2002/064745 A1 mentionne par exemple la réalisation d'un moule par impression tridimensionnelle pour former un pilier dentaire.

L'objet de la présente demande vise à proposer un procédé amélioré pour la production dans un contexte industriel, pouvant en outre mener à d'autres avantages.

A cet effet, est proposé selon un premier aspect, un procédé de fabrication d'un pilier dentaire de prothèse dentaire, un pilier dentaire comportant un insert en partie basse et un corps en partie haute, le procédé comportant :
- Une étape de réalisation d'un moule d'un corps de pilier dentaire comportant une étape d'impression tridimensionnelle du moule ;
- Une étape de fourniture d'un insert du pilier dentaire puis une étape de positionnement d'au moins une partie de l'insert dans un logement de positionnement d'insert du moule ; puis
- Une étape de réalisation spécifique d'un corps du pilier dentaire, comportant une étape de coulée d'un matériau métallique dans le moule par surmoulage sur l'insert.

Il pouvait exister une réticence de l'homme du métier à utiliser un procédé de moulage pour réaliser un corps de pilier dentaire sur-mesure. En effet, la réalisation d'un moule est généralement longue et minutieuse, ce qui pouvait paraître contreproductif pour réaliser une pièce unique. Or, grâce à la réalisation du moule par impression tridimensionnelle, il est ainsi possible de réaliser facilement et rapidement un moule en vue d'obtenir un corps sur-mesure. Un procédé selon l'invention permet ainsi d'obtenir facilement et rapidement un corps pour pilier dentaire réalisé au cas par cas, c'est-à-dire sur-mesure.

Selon un mode de réalisation intéressant, l'étape de réalisation du moule comporte une étape de réalisation d'un moule en coquilles comportant au moins une empreinte de corps de pilier dentaire.

Un tel moule est ainsi particulièrement commode à réaliser, en partant d'un dos de chaque coquille.

Selon un exemple de mise en oeuvre privilégié, le moule est réalisé en matériau réfractaire, par exemple en céramique ou métal réfractaire.

A titre d'exemple non limitatif, le matériau du moule peut par exemple comporter de la céramique, du type zircone (ZrO₂), de l'oxyde d'alumine (Al₂O₃), un composite Alumine Zircone, du carbure de silicium, et/ou encore de l'oxyde de titane.

Par exemple, l'étape d'impression tridimensionnelle comporte une impression, ou un frittage, de poudre de céramique ou de métal.

Malgré les réticences de l'homme du métier à envisager une réalisation de pilier en deux parties, la réalisation du corps par surmoulage sur l'insert s'est avérée particulièrement intéressante pour réaliser facilement et rapidement un pilier en contexte industriel.

Selon un mode de réalisation intéressant, le procédé comporte une étape de réalisation en série de l'insert en métal.

Selon un autre mode de réalisation intéressant, le procédé comporte, avant l'étape de coulée du matériau métallique dans le moule, une étape de positionnement d'un noyau dans le moule configuré pour former un alésage dans le corps.

Il est alors possible de ménager un passage dans un cas ou le pilier obtenu est ensuite fixé à un implant par une vis par exemple.

Selon encore un autre mode de réalisation, le noyau bouche un alésage axial de l'insert, par exemple une fois l'insert positionné dans au moins une partie du moule.

Le procédé comporte en outre possiblement une étape d'usinage et de finition et/ou de parachèvement.

Ainsi, au moins une zone trans-gingivale du pilier présente in fine un état de surface suffisant pour éviter d'irriter la gencive qui viendra en contact.

Est également proposé, selon un deuxième aspect, non revendiqué ici, un pilier dentaire obtenu par un procédé comportant au moins une partie des caractéristiques décrites précédemment.

Selon un exemple de réalisation préféré, le pilier dentaire comporte un insert et un corps surmontant l'insert, l'insert comportant une partie inférieure comportant une connectique avec un implant et une partie supérieure de liaison avec le corps sur laquelle le corps est surmoulé, la partie supérieure de l'insert comportant au moins un élément de rétention axiale configuré pour retenir axialement le corps.

Un tel élément de rétention axiale comporte par exemple un anneau ou une série d'anneaux.

Par exemple, l'insert comporte un bourrelet délimitant une base de la partie supérieure de l'insert sur laquelle le corps est surmoulé, le bourrelet étant configuré pour sceller un pourtour de l'insert lorsque celui-ci est positionné dans le moule en vue d'une étape de coulée de métal pour réaliser le corps.

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
Les figures 1 et 2 présentent les deux coquilles d'un moule en coquille selon un exemple de réalisation de l'invention comportant une empreinte pour réaliser un corps,
La figure 3 présente une vue en perspective d'une approche des deux coquilles du moule des figures 1 et 2 en vue de fermer le moule,
La figure 4 présente un exemple de réalisation d'un insert de pilier dentaire,
La figure 5 présente un positionnement de l'insert de la figure 4 dans une partie de l'empreinte d'une coquille du moule selon un exemple de réalisation de la présente invention,
La figure 6 présente une vue en perspective d'une approche des deux coquilles du moule en vue de fermer le moule avec l'insert positionné,
La figure 7 montre le moule fermé avec l'insert scellant une partie de l'empreinte du moule,
La figure 8 présente une coquille du moule comportant un noyau selon un exemple de réalisation de l'invention,
La figure 9 présente le moule fermé comportant le noyau après qu'une coulée a été réalisée selon un exemple de réalisation de la présente invention,
La figure 10 présente une coquille du moule de la figure 9 après ouverture suite à la coulée,
La figure 11 présente un brut de décoffrage obtenu,
La figure 12 présente le brut de décoffrage duquel le noyau a été retiré, et
La figure 13 présente un pilier dentaire obtenu fini, selon un exemple de réalisation.

Les éléments identiques représentés sur les figures précitées sont identifiés par des références numériques identiques.

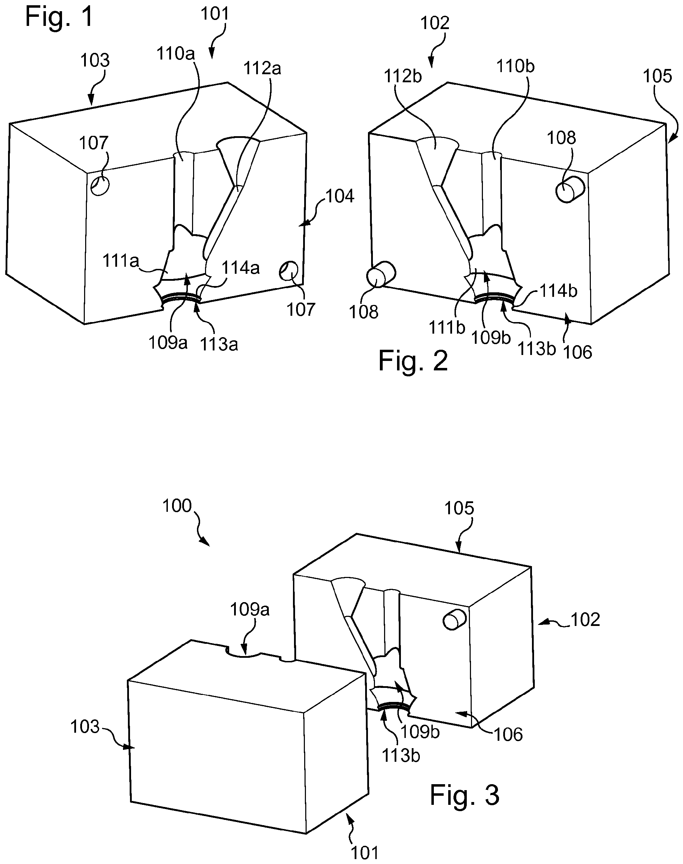

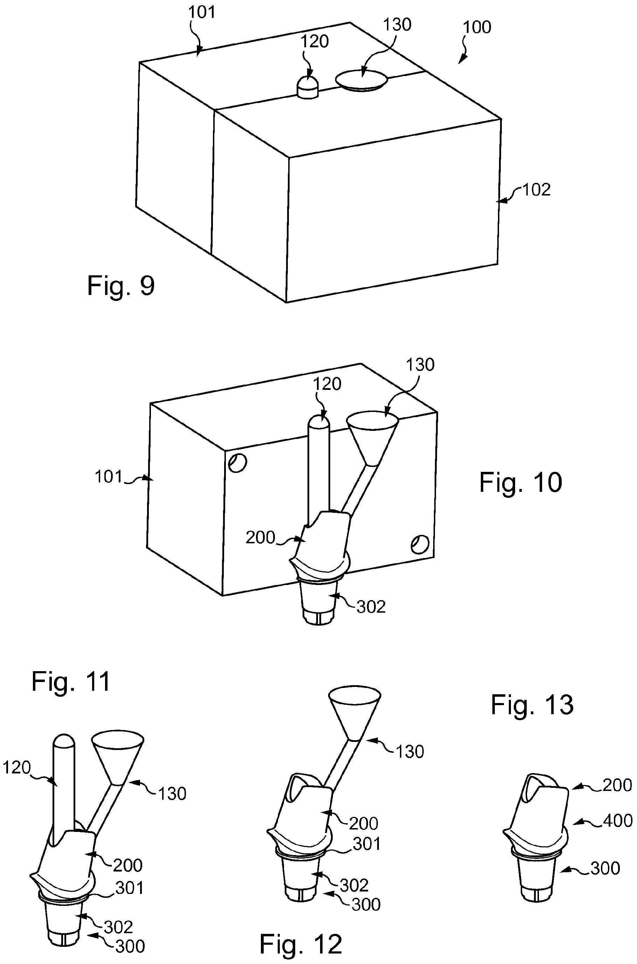

Selon l'invention, afin de réaliser des corps 200 de pilier dentaire 400 (visible par exemple sur les figures 10 à 13) par moulage, un moule 100 tel que représenté figures 1 et 2 est réalisé par impression tridimensionnelle.

Sur les figures, des éventuelles masselottes-évents ne sont pas représentées par souci de simplification ; le moule pourrait en comporter si nécessaire selon le procédé de moulage choisi.

Il s'agit ici d'un moule 100 en deux coquilles 101, 102.

Le moule 100 a ici une forme globalement parallélépipédique.

Une première coquille 101 comporte un dos 103 et une face avant 104, qui a ici une forme globalement rectangulaire, par laquelle elle s'assemble avec une deuxième coquille 102.

La deuxième coquille 102 comporte également un dos 105 et une face avant 106, qui a ici une forme globalement rectangulaire, par laquelle elle s'assemble avec la première coquille 101.

Pour réaliser l'assemblage, c'est-à-dire la fermeture du moule 100, la première coquille 101 comporte deux trous 107 et la deuxième coquille 102 comporte deux pions de centrage 108. Ici les deux trous 107 sont formés depuis la face avant 104 de la première coquille 101 dans deux coins diamétralement opposés de la face avant 104 de la première coquille 101 et par conséquent les deux pions de centrage 108 sont formés en saillie depuis la face avant 106 de la deuxième coquille 102 dans deux coins diamétralement opposés de la face avant 106 et de sorte à entrer dans les trous 107 lorsque le moule est fermé.

Pour réaliser le moulage d'un corps 200 (visible par exemple sur les figures 10 à 13), chaque coquille 101, 102 comporte une demi-empreinte 109a, 109b creusée du côté de sa face avant 104, 106.

Les deux demi-empreintes 109a, 109b sont formées « en miroir » dans chaque coquille 101, 102. Les deux demi-empreintes peuvent être symétriques ou non en fonction des besoins puisque chaque corps est personnalisé. Cela étant, par souci de simplification de la description, seule l'une des deux demi-empreintes 109a, 109b est décrite en détails ici puisqu'elles présentent néanmoins les mêmes caractéristiques générales. Les mêmes éléments sont indiqués par la même référence numérique avec le suffixe « a » pour se référer à la demi-empreinte de la première coquille 101 et avec le suffixe « b » pour se référer à la demi-empreinte de la deuxième coquille 102.

La demi-empreinte 109a comporte ici essentiellement trois parties 110a, 111a, 112a ; elle pourrait toutefois en comporter d'autres si besoin.

Les trois parties représentées ici sont un emplacement pour noyau 110a, une cavité de moulage de corps 111a et un trou de coulée 112a.

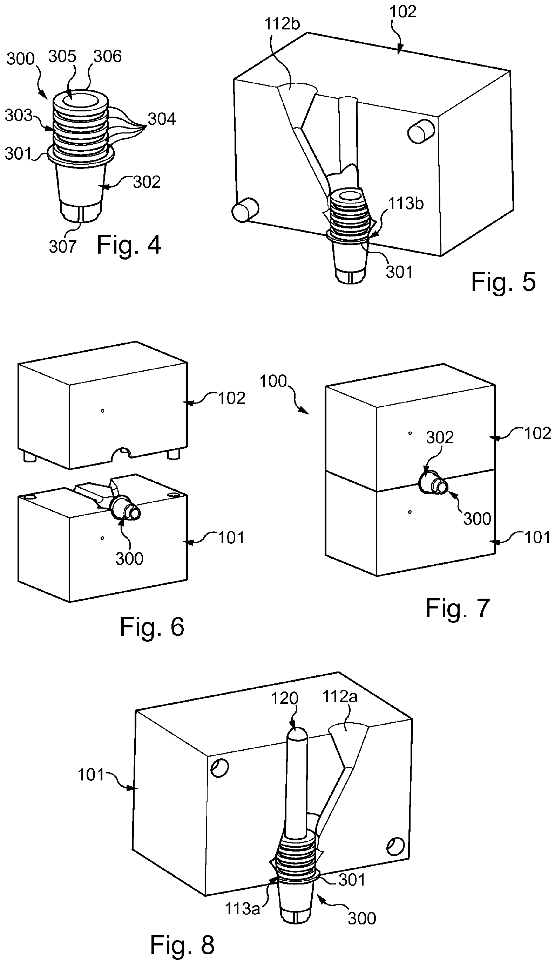

L'emplacement pour noyau 110a a ici une forme de demi-cylindre rectiligne à section circulaire : en effet, il est ici prévu pour un noyau 120 (visible par exemple figures 8, 10, et 11) en forme de barreau car il est configuré pour réaliser un trou dans le corps 200 et boucher un alésage 305 de l'insert 300 (visible par exemple figure 4) lors de la coulée. L'emplacement pour noyau 110a débouche donc d'une part en surface supérieure du moule, du côté de laquelle est ici réalisée la coulée, et d'autre part dans la cavité de moulage de corps 111a.

La cavité de moulage de corps 111a a une forme dépendant de celle du corps à mouler.

En outre, dans le présent exemple de réalisation, la cavité de moulage de corps 111a comporte un logement de positionnement d'insert 113a configuré pour recevoir un insert, tel que l'insert 300 représenté figure 4.

En particulier ici, le logement de positionnement d'insert 113a comporte essentiellement une rainure 114a creusée à une base de la cavité de moulage de corps 111a et configuré pour recevoir un bourrelet 301 de l'insert 300. Une fois en position et le moule fermé, le bourrelet 301 forme une liaison étanche avec les rainures 114a, 114b.

Enfin, le trou de coulée 112a comporte un canal de coulée débouchant dans la cavité de moulage de corps 111a et une masselotte de coulée (également nommé creuset d'alimentation) à un bout du canal de coulée débouchant à la surface supérieure du moule, par où est introduit le métal pour réaliser le moulage.

La demi-empreinte 109b de la deuxième coquille 102 comporte donc ici essentiellement trois parties 110b, 111b, 112b analogues à celles précédemment décrites ; elle pourrait toutefois en comporter d'autres si besoin.

Par simplification dans le présent exemple de réalisation, chaque face avant d'une coquille ne présente qu'une seule demi-empreinte.

Mais bien entendu, dans le cadre de la présente invention, il est fort avantageux que le moule comporte plusieurs empreintes qui seraient alors alignées, c'est-à-dire que chaque coquille présenterait sur sa face avant une répétition de demi-empreintes.

Ainsi, soit chaque empreinte comporte son propre trou de coulée (ce qui reviendrait à avoir un équivalent d'une succession de moules tels que celui décrit précédemment positionnés les uns à côtés des autres), soit le moule ne comporte qu'un seul trou de coulée et toutes les empreintes sont reliées entre elles par un canal. Dans ce cas, les empreintes seraient avantageusement positionnées les unes au-dessus des autres par rapport à un sens de coulée afin de faciliter le remplissage du métal.

Toutefois, les empreintes différeraient les unes des autres au moins de par la conformation de leur cavité de moulage de corps respective.

En effet, il est intéressant que chaque corps soit réalisé individuellement, sur mesure. Mais il est également avantageux de pouvoir réaliser plusieurs corps simultanément.

Un moule selon l'invention permet ainsi de réaliser ces corps individuellement par moulage, en réalisant le moule par impression tridimensionnelle.

Pour cela, un procédé de réalisation d'un moule comporte par exemple une étape de réception de fichiers numériques comportant des instructions correspondant à chaque corps voulu.

Ensuite, il comporte par exemple une étape d'impression d'une poudre de matériau réfractaire, en particulier de céramique ou métal réfractaire.

Selon un exemple de mise en oeuvre, l'étape d'impression débute par une impression du dos de chaque coquille pour finir par une impression de la face avant de chaque coquille, hormis des éventuels plots de centrage possiblement réalisés alors après la face-avant de la coquille correspondante.

Selon un exemple de mise en oeuvre, les deux coquilles sont imprimées simultanément.

Une telle étape est particulièrement facile à réaliser par impression tridimensionnelle.

Ainsi, un tel procédé permet de réaliser un moule très rapidement en vue de réaliser plusieurs piliers dentaires 400 simultanément comportant chacun un corps 200 sur-mesure par moulage.

Pour cela, il est intéressant de pouvoir positionner un insert dans le moule. Un tel insert est par exemple représenté figure 4.

De manière générale, un insert 300 sert à fixer un pilier dentaire 400 à un implant dentaire (non représenté).

Dans le présent exemple de réalisation, l'insert 300, préfabriqué, est par exemple en matériaux métalliques, tel que le titane ou un alliage chrome-cobalt par exemple.

L'insert 300 est possiblement réalisé en série par usinage et par exemple, plusieurs inserts identiques peuvent être réalisés simultanément si nécessaire.

L'insert 300 est principalement axisymétrique.

En particulier, il comprend ici une partie inférieure 302 et une partie supérieure 303.

La partie inférieure 302 comporte une connectique adaptée à l'implant dentaire et la partie supérieure 303 comporte une connectique adaptée au corps 200.

Si nécessaire, au moins l'une des connectiques peut être réalisée au cas par cas ou bien l'insert peut être réalisé de manière standard, c'est-à-dire être identique pour différents implants.

De plus, l'insert comporte ici le bourrelet 301 mentionné précédemment qui, dans cet exemple, délimite la partie supérieure par rapport à la partie inférieure.

Ainsi, dans le présent exemple de réalisation, la partie supérieure 303 est définie entre une extrémité apicale 306 et le bourrelet 301 et la partie inférieure 302 est définie entre le bourrelet 301 et une extrémité proximale 307.

Dans l'exemple de réalisation illustré, la partie supérieure 303 comporte en particulier un élément de rétention axiale qui est ici matérialisé par une série d'anneaux 304 ; bien entendu l'élément de rétention axiale pourrait ne comporter qu'un seul anneau ou être matérialisé différemment, par exemple par des trous ou des pions en saillies.

Un tel élément de rétention axiale permet un meilleur ancrage du corps surmoulé sur l'insert.

Enfin, l'insert 300 présenté ici comporte un alésage axial 305 formé au moins à partir de l'extrémité apicale 306 de l'insert.

Un tel alésage est configuré pour recevoir le noyau 120.

Par exemple, l'alésage axial 305 comporte possiblement une butée (non visible) sur laquelle le noyau 120 est positionné en appui lorsque l'insert et le noyau sont positionnés dans le moule. L'alésage axial 305 est éventuellement fileté de sorte à pouvoir fixer ultérieurement l'insert à un implant (non représenté) par une vis.

Les figures 5 à 13 présentent ensuite un exemple de réalisation d'un pilier dentaire 400 selon l'invention, une fois le moule réalisé.

Ainsi, comme l'illustre la figure 5, une étape, dite d'insertion d'insert, consiste à positionner au moins un insert, tel l'insert 300 représenté figure 4, dans une empreinte du moule 100.

Selon un exemple particulier, cette étape consiste à positionner l'insert 300 dans une demi-empreinte 109a, 109b de l'une des coquilles 101, 102 du moule 100, par exemple dans un logement de positionnement d'insert 113a, 113b prévu dans la cavité de moulage de corps 111a, 111b.

En l'occurrence, cette étape consiste plus particulièrement ici à positionner un bourrelet 301 de l'insert 300 dans une rainure 114a, 114b formée à cet effet dans le logement de positionnement d'insert 113a, 113b.

Si le moule comporte plusieurs empreintes en vue de réaliser plusieurs corps, alors cette étape consiste de la même manière à positionner un insert dans chacune des empreintes prévues à cet effet.

Avant ou après l'étape d'insertion d'insert, le procédé comporte une étape éventuelle de positionnement de la coquille du moule dans laquelle est positionné l'insert sur le dos afin de maintenir plus facilement l'insert en position comme l'illustre la figure 6.

Dans le présent exemple, le procédé comporte ensuite une étape de fermeture du moule, comme le montre la figure 7, dans laquelle les pions de centrage 108 de la deuxième coquille 102 sont enfoncés dans les trous 107 de la première coquille 101.

Le procédé comporte en outre une étape de placement d'un noyau 120. Cette étape peut avoir lieu avant ou après l'étape de fermeture du moule. Un tel noyau 120 permet de réaliser un trou dans le corps, qui en l'occurrence traverse le corps de part en part. Le noyau 120 est ainsi destiné à générer une épargne dans le corps pour permettre une insertion d'une vis pour fixer l'insert à un implant (non représenté). La figure 8 présente à titre d'exemple cette étape de placement du noyau avec le moule ouvert afin de mieux montrer sa position dans le moule. En effet, le noyau 120 est par exemple enfoncé dans l'alésage axial 305 présent dans l'insert 300 en étant positionné dans l'emplacement pour noyau 110a, 110b. Le noyau 120 bouche ainsi l'alésage axial 305.

Dans le présent exemple de réalisation, il y a donc ainsi des liaisons étanches entre le noyau et le moule, entre le noyau et l'insert et entre l'insert et le moule.

Une fois le moule fermé avec le noyau et l'insert en position, le procédé comporte une étape de coulée dans laquelle du métal liquide est introduit via le trou de coulée 112a, 112b dans la cavité de moulage de corps 111a, 111b. Cette étape est par exemple illustrée par la figure 9. Le métal en fusion vient alors en contact avec au moins la partie supérieure 303 de l'insert 300 et s'y lie par, par exemple, un phénomène de brasage diffusion.

Ensuite, le procédé comporte une étape d'ouverture du moule, comme l'illustre la figure 10, puis une étape de démoulage comportant une extraction d'un brut de décoffrage représenté figure 11.

Le procédé comporte alors par exemple une étape de retrait du noyau, illustrée par exemple figure 12.

Enfin, le procédé comporte une étape de parachèvement qui comporte par exemple une étape de suppression de carotte d'injection 130, étape dans laquelle une partie du moulage correspondant au trou de coulée 112a, 112b est supprimée, et éventuellement une étape de finition qui comporte par exemple une sous-étape de polissage et/ou une sous-étape d'ébavurage et/ou une sous-étape de lustrage.

Selon un exemple de réalisation non représenté, si l'insert est fixé à un implant par un autre moyen qu'avec une vis, notamment sans vis, par exemple par collage ou soudure, alors il est possible de se dispenser d'alésage axial 305 dans l'insert 300. Par conséquent, il est possible d'éviter de réaliser un trou dans le corps ; un noyau 120 est alors possiblement superflu ainsi que l'emplacement pour noyau 110a, 110b, prévu pour recevoir un tel noyau, dont le moule peut alors être dépourvu. Les étapes de procédé correspondantes sont alors omises.

Selon encore un autre exemple de réalisation non représenté, la coulée peut être réalisée avec un matériau sous pression à l'aide d'une buse de coulée ou encore par remplissage naturel gravitationnel.

## Revendications

1. Procédé de fabrication d'un pilier dentaire (400) de prothèse dentaire, un pilier dentaire (400) comportant un insert en partie basse et un corps (200) en partie haute, le procédé comportant :
- Une étape de réalisation d'un moule (100) d'un corps (200) de pilier dentaire (400) comportant une étape d'impression tridimensionnelle du moule (100) ;
- Une étape de fourniture d'un insert (300) du pilier dentaire (400) puis une étape de positionnement d'au moins une partie de l'insert (300) dans un logement de positionnement d'insert (113a, 113b) du moule (100) ; puis
- Une étape de réalisation spécifique d'un corps (200) du pilier dentaire (400), comportant une étape de coulée d'un matériau métallique dans le moule (100) par surmoulage sur l'insert.

2. Procédé selon la revendication 1, **caractérisé en ce que** l'étape de réalisation du moule (100) comporte une étape de réalisation d'un moule en coquilles comportant au moins une empreinte de corps (200) de pilier dentaire (400).

3. Procédé selon l'une quelconque des revendications 1 ou 2, **caractérisé en ce que** le moule (100) est réalisé en matériau réfractaire, par exemple en céramique ou métal réfractaire.

4. Procédé selon l'une quelconque des revendications 1 à 3, **caractérisé en ce qu'**il comporte une étape de réalisation en série de l'insert (300) en métal.

5. Procédé selon l'une quelconque des revendications 1 à 4, **caractérisé en ce qu'**il comporte, avant l'étape de coulée du matériau métallique dans le moule (100), une étape de positionnement d'un noyau (120) dans le moule (100) configuré pour former un alésage dans le corps (200).

6. Procédé selon la revendication 5, **caractérisé en ce qu'**il comporte une étape d'enfoncement du noyau (120) dans un alésage axial (305) de l'insert (300), le noyau (120) bouchant l'alésage axial (305) de l'insert (300).

## Patentansprüche

1. Verfahren zum Herstellen eines dentalen Abutments (400) für Zahnersatz, wobei ein dentales Abutment (400) einen Einsatz im unteren Teil und einen Körper (200) im oberen Teil aufweist, wobei das Verfahren umfasst:
- einen Schritt des Herstellens einer Gießform (100) eines Körpers (200) des dentalen Abutments, der einen Schritt des dreidimensionalen Druckens der Gießform (100) umfasst;
- einen Schritt des Bereitstellens von einem Einsatz (300) des dentalen Abutments (400), dann einen Schritt des Positionierens von zumindest einem Teil des Einsatzes (300) in einer Einsatzpositionieraufnahme (113a, 113b) der Gießform (100); dann
- einen Schritt des spezifischen Ausbildens von einem Körper (200) des dentalen Abutments (400), umfassend einen Schritt des Gießens von einem Metallmaterial in die Gießform (100) durch Anformen an den Einsatz.

2. Verfahren nach Anspruch 1, **dadurch gekennzeichnet, dass** der Schritt des Herstellens der Gießform (100) einen Schritt des Herstellens von einer schalenartigen Gießform umfasst, die zumindest einen Abdruck des Körpers (200) des dentalen Abutments (400) enthält.

3. Verfahren nach einem der Ansprüche 1 oder 2, **dadurch gekennzeichnet, dass** die Gießform (100) aus hitzebeständigem Material, beispielsweise aus Keramik oder hitzebeständigem Metall, hergestellt ist.

4. Verfahren nach einem der Ansprüche 1 bis 3, **dadurch gekennzeichnet, dass** es einen Schritt der Serienherstellung von dem Einsatz (300) aus Metall umfasst.

5. Verfahren nach einem der Ansprüche 1 bis 4, **dadurch gekennzeichnet, dass** es vor dem Schritt des Gießens von dem Metallmaterial in die Gießform (100) einen Schritt des Positionierens von einem Kern (120) in die Gießform (100) umfasst, der dazu ausgelegt ist, einen Durchgang in dem Körper (200) zu bilden.

6. Verfahren nach Anspruch 5, **dadurch gekennzeichnet, dass** es einen Schritt des Einpressens von dem Kern (120) in einen axialen Durchgang (305) des Einsatzes (300) umfasst, wobei der Kern (120) den axialen Durchgang (305) des Einsatzes (300) verschließt.

## Claims

1. Method for producing a dental abutment (400) of a dental prosthesis, a dental abutment (400) comprising an insert in the lower part and a body (200) in the upper part, the method comprising:
- a step of producing a mould (100) for a body (200) of the dental abutment (400), comprising a step of 3D-printing of the mould (100);
- a step of providing an insert (300) of the dental abutment (400) followed by a step of positioning at least one part of the insert (300) inside an insert-positioning recess (113a, 113b) in the mould (100); followed by
- a specific step of producing a body (200) of the dental abutment (400), comprising a step of casting a metal material into the mould (100) by overmoulding the insert.

2. Method according to claim 1, **characterised in that** the step of producing the mould (100) comprises a step of producing a shell mould comprising at least one cavity for the body (200) of the dental abutment (400).

3. Method according to either claim 1 or claim 2, **characterised in that** the mould (100) is made of a refractory material, for example made of refractory ceramic material or refractory metal.

4. Method according to any of claims 1 to 3, **characterised in that** it comprises a step of producing the insert (300) in series from metal.

5. Method according to any of claims 1 to 4, **characterised in that** it comprises, before the step of casting the metal material into the mould (100), a step of positioning a core (120) in the mould (100) so as to form a bore in the body (200).

6. Method according to claim 5, **characterised in that** it comprises a step of driving the core (120) into an axial bore (305) in the insert (300), the core (120) blocking the axial bore (305) in the insert (300).
